# EUROPEAN PATENT APPLICATION

(11) **EP 3 576 119 A1**
(43) Date of publication of application: **04.12.2019**
(21) Application number: 18745254.5
(22) Date of filing: 19.01.2018
(51) Int. Cl.: H01G 9/02, H01G 11/52, H01M 2/16

(54) **SEPARATOR FOR ELECTROCHEMICAL ELEMENT AND ELECTROCHEMICAL ELEMENT**

(30) Priority: 27.01.2017 JP 2017012915
(71) Applicant: Nippon Kodoshi Corporation, Kochi-shi, Kochi 781-0395 (JP)
(72) Inventor: IGAWA, Atsushi, Kochi-shi, Kochi 781-0395 (JP); FUJIMOTO, Naoki, Kochi-shi, Kochi 781-0395 (JP); UETA, Masahiko, Kochi-shi, Kochi 781-0395 (JP)
(74) Representative: Betten & Resch
(86) International application number: PCT/JP2018/001526
(87) International publication number: WO 2018/139353

(57) **Abstract**

Provided is a separator for an electrochemical element that suppresses capacitance drop and voltage drop after use for a long time in a high temperature environment. The separator for an electrochemical element is a separator interposed between a pair of electrodes for isolating both the electrodes from each other and holding an electrolytic solution, in which the separator contains a cellulose-based fiber, and the total content of chlorine in the separator is 30 ppm or less.

## Description

### Technical Field

The present invention relates to a separator for an electrochemical element and an electrochemical element using the separator for an electrochemical element.

### Background Art

Examples of the electrochemical element include an aluminum electrolytic capacitor, a conductive polymer aluminum solid electrolytic capacitor, a conductive polymer hybrid aluminum electrolytic capacitor, an electric double layer capacitor, a lithium ion capacitor, a lithium ion secondary battery, and a lithium primary battery.

These electrochemical elements have been adopted in many fields, for example, automobile-related devices, digital devices, renewable energy-related devices such as wind power generation/photovoltaic power generation, and a communication device such as a smart meter.

In recent years, in automobile-related devices and digital devices where electronization is advancing, components mounted on these devices need to prolong the lives thereof. The prolongation of the lives of the components mounted on these devices is one of factors for prolongation of the lives of the devices themselves, which is a large advantage.

For example, in a case of use for an automobile, there are an increasing number of cases where an electrochemical element is installed in a high temperature engine room. For example, in a case of use for power storage facilities or power generation facilities, these devices are often exposed to direct sunlight outdoors. An electrochemical element used for such an application needs improvement in reliability under a higher temperature environment more and more.

The above-described electrochemical element adopts a basic structure in which an anode and a cathode are isolated from each other by a separator, and the separator holds an electrolytic solution. Therefore, the separator needs to have many functions such as resistance to burrs of an electrode member, a property of holding the electrolytic solution, low resistance after impregnation with the electrolytic solution, and being low ionic impurities as a material. A cellulose-based separator is adopted as a material satisfying these functions.

As the cellulose-based separator, a separator formed of 100% natural cellulose, a separator formed of a mixture of natural cellulose and regenerated cellulose, a separator formed of a mixture of regenerated cellulose and a synthetic fiber, a separator formed of 100% regenerated cellulose, and the like have been proposed.

In addition, in order to pursue burr resistance of the separator, a property of holding the electrolytic solution, and low resistance of the separator, many techniques have been disclosed.

Patent Literature 1 particularly discloses a low voltage separator for an aluminum electrolytic capacitor, and discloses a technique for reducing resistance of a separator after impregnation with an electrolytic solution by optimizing the shape of a fiber constituting the separator.

Patent Literature 2 discloses a separator contributing to increasing the voltage of an aluminum electrolytic capacitor, and discloses a technique for improving short circuit resistance of the separator in a high density layer in which cellulose has been highly beaten and improving an impregnation property of an electrolytic solution in a low density layer.

Patent Literature 3 discloses a separator constituted by sisal hemp pulp which is a natural cellulose fiber and solvent-spun rayon which is a regenerated cellulose fiber, and discloses a technique for enhancing the denseness of the separator and reducing a short circuit failure ratio of an electric double layer capacitor.

Patent Literature 4 discloses a technique for improving absorbency of an electrolytic solution by constituting a separator by a cellulose fiber and a synthetic fiber, the fiber lengths of which being controlled.

Patent Literature 5 discloses a separator having a very high denseness and further having excellent ion permeability, and discloses a technique that can contribute to reduction in short circuit failure of an electric double layer capacitor, reduction in internal resistance, and increase in volume energy density.

### Citation List

### Patent Literature

Patent Literature 1: JP 62-126622 A
Patent Literature 2: JP 6-168848 A
Patent Literature 3: JP 9-45586 A
Patent Literature 4: JP 2012-222266 A
Patent Literature 5: JP 2000-3834 A

### Summary of Invention

### Technical Problem

Patent Literatures 1 to 5 describe that it is important to reduce ionic impurities contained in a separator for the purpose of preventing corrosion of an electrode member.

As a specific method for controlling the amount of ionic impurities, the content of chlorine is measured and controlled by the method defined in "JIS C 2300-2 Cellulosic papers for electrical purpose-Part 2: Methods of test '17 Content of chlorine'".

For example, in an aluminum electrolytic capacitor, when a separator is incorporated in an electrochemical element, the separator becomes impregnated with an electrolytic solution. If anionic impurities are contained in the separator, anionic impurities that have been extracted from the separator into the electrolytic solution erode an oxide film of an anode foil. If the anionic impurities erode the anode oxide film, the voltage of the electrochemical element does not rise to a rated voltage, the capacitance drops due to reduction in the foil area, or a valve operates by generation of oxygen gas and hydrogen gas due to foil corrosion disadvantageously.

In order to avoid the above-described problems, control of the content of chlorine by the method defined in JIS C 2300-2 can be said to be a suitable means.

However, it has become clear that the capacitance gradually drops, or the voltage does not rise to a rated voltage, for example, disadvantageously after an electrochemical element using a conventional separator that controls the amount of anionic impurities is used for a long time in a high temperature environment.

That is, it has been found that merely controlling the amount of chlorine measured by the method defined in JIS C 2300-2 gradually leads to capacitance drop and voltage drop after the electrochemical element is used for a long time in a high temperature environment.

Here, the measurement by the method defined in JIS C 2300-2 is a method for immersing a separator in hot water and measuring the amount of ionic impurities extracted. That is, the amount of chlorine determined by measurement according to JIS C 2300-2 is the amount of chloride ions extracted from a surface of a fiber constituting a separator by immersing the separator in hot water.

As a result of studies by the present inventors, the following has been found. That is, after even a separator in which the content of chloride ions measured by the method defined in JIS C 2300-2 is controlled to a very low value of 2 ppm, for example, is incorporated in an electrochemical element and used, the capacitance drops, or the voltage does not rise to a rated voltage disadvantageously in some cases.

In addition, the following has been revealed. That is, in a case where an electrochemical element is manufactured using a separator in which the amount of chloride ions is controlled to a low value of 1 ppm by the method defined in JIS C 2300-2, both voltage and capacitance operate without problems at the time of element formation (immediately after formation). However, after the element is used for a long time under a high temperature environment exceeding 150°C, for example, the voltage drops or the capacitance drops.

### Solution to Problem

The separator for an electrochemical element according to the present invention is a separator interposed between a pair of electrodes for isolating both the electrodes from each other and holding an electrolytic solution, characterized in that the separator contains a cellulose-based fiber, and the total content of chlorine in the separator is 30 ppm or less.

The total content of chlorine of the separator for an electrochemical element according to the present invention is the amount of chlorine "quantitatively determined by ion chromatography by burning and decomposing the separator by a quartz tube combustion method and causing the generated gas to be absorbed by an absorption liquid", and is the total amount of chlorine contained in the separator unlike the content of chloride ions extracted into water from the separator, conventionally controlled.

In the separator for an electrochemical element according to the present invention, the cellulose-based fiber may contain either a natural fiber or a regenerated fiber.

The natural fiber may be formed of one or more kinds of fibers selected from a wood fiber and a non-wood fiber.

The regenerated fiber may be a solvent-spun cellulose fiber.

The electrochemical element of the present invention is characterized by using the separator for an electrochemical element according to the present invention. In the electrochemical element of the present invention, the electrochemical element can be an aluminum electrolytic capacitor or an electric double layer capacitor.

### Advantageous Effects of Invention

According to the present invention described above, it is possible to provide an electrochemical element that suppresses capacitance drop and voltage drop after use for a long time in a high temperature environment, and a separator for the electrochemical element.

According to the present invention, it is possible to provide a separator in which ionic impurities are reduced. By using the separator, it is possible to contribute to improvement in reliability for a long time even after the capacitor is used under a high temperature environment. In addition, even in a case where the capacitor is not used in a high temperature environment, that is, even in a case where the capacitor is used in a conventional temperature range, the life of the capacitor can be further prolonged.

### Description of Embodiments

Hereinafter, an embodiment according to the present invention will be described.

The separator for an electrochemical element according to the present invention is a separator for an electrochemical element interposed between a pair of electrodes and capable of isolating both the electrodes from each other and holding an electrolytic solution containing an electrolyte. The separator contains a cellulose-based fiber, and the total content of chlorine in the separator, measured by a quartz tube combustion method, is 30 ppm or less.

The content of chlorine contained in the separator of the present invention is the amount of chlorine "quantitatively determined by ion chromatography by burning and decomposing the separator by a quartz tube combustion method and causing the generated gas to be absorbed by an absorption liquid", and is the total amount of chlorine contained in the separator unlike the amount of chloride ions extracted into water from the separator, conventionally controlled.

The total content of chlorine contained in the separator is preferably 30 ppm or less. The total content is more preferably 15 ppm or less, and still more preferably 10 ppm or less.

In a case where the electrochemical element is an aluminum electrolytic capacitor, when the total chlorine contained in the separator exceeds 30 ppm, chlorine is ionized and exudes into the electrolytic solution with which the separator is impregnated, and which is held by the separator, and invades an anode oxide film, leading to generation of gas or leakage of liquid due to valve operation or short circuit.

In a case where the electrochemical element is an electric double layer capacitor (electric double layer capacitor), chlorine is ionized and exudes into the electrolytic solution with which the separator is impregnated, and which is held by the separator, and invades an aluminum foil as a current collector, resulting in capacitance drop and increase in resistance.

The cellulose-based fiber used for the separator of the present invention is preferably a natural fiber or a regenerated fiber. In a case of the natural fiber, a wood fiber or a non-wood fiber can be used. However, even in a case of the natural fiber, an animal fiber and a mineral fiber are not suitable from viewpoints of the content of chlorine and safety and hygiene during handling.

Specific examples of the wood fiber include a coniferous tree and a broad-leaved tree. As the former, fibers obtained from spruce, fir, pine, hemlock spruce, and the like can be used. As the latter, fibers obtained from beech, oak, birch, eucalyptus, and the like can be used.

Examples of the non-wood fiber include a vein fiber obtained from Manila hemp, sisal hemp, banana, pineapple, or the like, a bast fiber obtained from Broussonetia, paperbush, ganpi, jute, kenaf, hemp, flax, or the like, a stalk culm fiber obtained from esparto, bamboo, bagasse, straw, common reed, rush, sabai grass, or the like, a seed hair fiber obtained from cotton, linter, kapok, or the like, and a fruit fiber obtained from coconut or the like.

As described above, various plants can be used for the natural fiber used in the present invention. A pulp obtained by extracting (digesting) a fiber with a chemical solution at high temperature and high pressure from the above plants and bleaching the fiber if necessary can be used for the separator of the present invention.

The cellulose-based fiber used in the separator of the present invention may be a dissolved pulp hydrolyzed before digestion, a pulp obtained by purifying the dissolved pulp by alkali treatment, or furthermore a mercerized pulp.

In a case where a regenerated fiber is used as the cellulose-based fiber of the separator of the present invention, a solvent-spun cellulose fiber is preferable, and a lyocell fiber is preferable among the solvent-spun cellulose fibers. However, a cupra fiber, a viscose rayon fiber, and a polynosic rayon fiber are unsuitable although being solvent-spun cellulose fibers because of containing a large amount of impurities such as copper due to a manufacturing method.

Furthermore, the above-described various kinds of pulps or fibers may be beaten to be used.

In the separator of the present invention, fibers other than a cellulose-based fiber can also be used without particular limitation as long as the total content of chlorine in the separator is 30 ppm or less and other functions required as the separator are not inhibited.

The separator of the present invention can be obtained by controlling the content of chlorine, for example, by subjecting a chemical or water used for digestion or bleaching to desalting treatment in advance.

Examples of a method for digesting a pulp or a fiber in manufacturing the separator of the present invention include an alkali method (AP), a sulfate method (KP), and a sulfite method (SP). A digested pulp may be bleached or does not have to be bleached. If the pulp is bleached, chlorine-free bleaching can be adopted as a bleaching method. In chlorine-free bleaching, total chlorine-free bleaching is preferable.

However, there is no limitation on a method for manufacturing a fiber as a separator raw material, and is not limited to the above-described digestion method and bleaching method.

By using a chemical with a low content of chlorine or water and adopting the above-described digestion method and bleaching method, the total content of chlorine in the obtained pulp or fiber can be 75 ppm or less.

If the pulp or fiber has a content of chlorine of 75 ppm or less, by forming a separator using the pulp or fiber, the separator can have a total content of chlorine of 30 ppm or less. Incidentally, even if the pulp or fiber has a total content of chlorine of more than 75 ppm, there is no problem as long as the content of the pulp or fiber in the separator is small and the total content of chlorine in the separator can be 30 ppm or less.

As long as the separator has a total content of chlorine of 30 ppm or less, even in a case where a capacitor is used in a high temperature environment such as 150°C, the separator suppresses deterioration of capacitor characteristics, and can contribute to reduction in valve operation or leakage of liquid due to short circuit failure or rise in internal pressure.

In addition, even in a case where the capacitor is not used at such a high temperature as demanded in recent years, it is possible to prolong the life as compared with a capacitor using a conventional separator.

Generally, the separator has a thickness of about 10 to 80 µm and a density of about 0.25 to 1.00 g/cm³. Furthermore, a separator having a multilayer structure obtained by combining sheets each having such a thickness and density is also used. However, in the present invention, the thickness and the density of the separator are not particularly limited as long as the total content of chlorine of a sheet is 30 ppm or less.

Hereinafter, specific Examples, Comparative Examples, and the like of the separator for an electrochemical element according to the present invention and an electrochemical element including the separator for the electrochemical element will be described in detail.

### [Total content of chlorine]

Pretreatment by a quartz tube combustion method described in "JIS K 0127 General Rules for ion chromatography '6.3.5 Pre-combustion treatment of organic compound'" was performed, and generated gas was caused to be absorbed by an absorption liquid and used for ion chromatography measurement. That is, the whole of a test piece was completely burned and gasified, and the total amount of generated chlorine was measured.

### [Content of extracted chlorine]

An extract was obtained by the method defined in "17.2.3 Limit method (extraction third method)" of "JIS C 2300-2 Cellulosic papers for electrical purpose-Part 2: Methods of test '17 Content of chlorine'". Using this extract, the content of chlorine of the extract was measured according to "17.2.4.3 Ion chromatography (measurement)", and was taken as the content of extracted chlorine.

### [Contents of chlorine in pulp and fiber]

Table 1 illustrates methods for digesting and bleaching various pulps and fibers used in Examples and Comparative Example, and the contents of chlorine in the pulps and fibers.

**[Table 1]**

| | CATEGORY | TYPE OF MATERIAL | PRE-TREATMENT | DIGESTION | BLEACHING | POST-TREATMENT | CONTENT OF CHLORINE(ppm) | |
|---|---|---|---|---|---|---|---|---|
| | | | | | | | TOTAL CHLORINE | EXTRACTED CHLORINE |
| PULP1 | WOOD | CONIFEROUS TREE | HYDROLYSIS | SP | NON-CHLORINE | ALKALI TREATMENT | 5.1 | 2.0 |
| PULP2 | NON-WOOD | LINTER | - | AP | NON-CHLORINE | - | 73.2 | 3.3 |
| PULP3 | WOOD | CONIFEROUS TREE | - | KP | CHLORINE | - | 150.3 | 5.1 |
| PULP4 | NON-WOOD | SISAL HEMP | - | SP | - | - | 80.0 | 2.9 |
| FIBER1 | REGENERATED FIBER | SOLVENT-SPUN CELLULOSE | (HYDROLYSIS) | (SP) | (NON-CHLORINE) | (ALKALI TREATMENT) | 35.5 | 1.5 |
| FIBER2 | REGENERATED FIBER | SOLVENT-SPUN CELLULOSE | (HYDROLYSIS) | (SP) | (NON-CHLORINE) | (ALKALI TREATMENT) | 9.4 | 0.3 |
| FIBER3 | SYNTHETIC FIBER | POLYESTER | - | - | - | - | 2.6 | 1.2 |
| FIBER4 | SYNTHETIC FIBER | POLYESTER BINDER | - | - | - | - | 3.1 | 1.4 |
| FIBER5 | REGENERATED FIBER | SOLVENT-SPUN CELLULOSE | (HYDROLYSIS) | (SP) | (CHLORINE) | (ALKALI TREATMENT) | 78.2 | 1.9 |
| FIBER6 | SYNTHETIC FIBER | POLYPHENYLENE SULFIDE | - | - | - | - | 709.8 | 10.0 |
| FIBER7 | ANIMAL FIBER | WOOL | - | - | - | - | 320.7 | 4.5 |

The solvent-spun cellulose fiber is manufactured by dissolving a cellulose pulp as a raw material in a solvent and then regenerating the cellulose pulp. The bracketed description for each of fibers 1, 2, and 5 in Table 1 indicates a pulp used as a raw material of a solvent-spun cellulose fiber.

Table 1 indicates that even in a pulp or a fiber having an extremely small content of extracted chlorine of 2 ppm or less, the total content of chlorine is not necessarily small.

Using each of the pulps described above, separators of the following Examples, Comparative Examples, and Conventional Example were manufactured.

Incidentally, in the present embodiment, all the separators were formed by a papermaking method. However, the method for forming a separator is not limited to the papermaking method as long as the total content of chlorine is 30 ppm or less.

Various physical properties of the separator of the present embodiment were measured by the following method.

### [Thickness]

The thickness of a separator was measured by the method for folding a sheet into ten sheets in "5.1.3 Case of measuring thickness by folding sheet" using a micrometer in "5.1.1 Measuring instrument and measuring method a) Case of using outer micrometer" defined in "JIS C 2300-2 'Cellulosic papers for electrical purpose-Part 2: Methods of test' 5.1 Thickness".

### [Density]

The density of a separator in a bone dry state was measured by the method defined in method B of "JIS C 2300-2 'Cellulosic papers for electrical purpose-Part 2: Methods of test' 7.0A Density".

### [Total content of chlorine and content of extracted chlorine]

The total content of chlorine and the content of extracted chlorine were measured by the same method as that in the above-described [Content of chlorine in pulp and fiber].

### (Example 1)

A Fourdrinier layer having a thickness of 20 µm and a density of 0.95 g/cm³, obtained by subjecting a raw material obtained by beating pulp 1 with a disc refiner to Fourdrinier papermaking, and a layer having a thickness of 25 µm and a density of 0.50 g/cm³, obtained by subjecting pulp 4 to cylinder papermaking were laminated to each other to obtain a separator of Example 1.

This separator had a thickness of 45 µm and a density of 0.68 g/cm³, and had a mass ratio of 60:40 between the Fourdrinier layer and the cylinder layer. The separator had a total content of chlorine of 19.3 ppm and a content of extracted chlorine of 0.7 ppm.

### (Example 2)

A raw material obtained by mixing 70% by mass of pulp 2 and 30% by mass of pulp 4 and beating the resulting mixture with a disc refiner was subjected to cylinder papermaking to obtain a separator of Example 2.

This separator had a thickness of 80 µm and a density of 0.25 g/cm³. The separator had a total content of chlorine of 28.6 ppm and a content of extracted chlorine of 0.6 ppm.

### (Example 3)

A raw material obtained by beating 50% by mass of fiber 1 with a conical refiner and 50% by mass of fiber 3 that had not been beaten were mixed and subjected to Fourdrinier papermaking to obtain a separator of Example 3.

This separator had a thickness of 20 µm and a density of 0.40 g/cm³. The separator had a total content of chlorine of 14.7 ppm and a content of extracted chlorine of 0.3 ppm.

### (Example 4)

Only fiber 2 that had been beaten with a disc refiner was subjected to Fourdrinier papermaking to obtain a separator of Example 4.

This separator had a thickness of 10 µm and a density of 0.60 g/cm³. The separator had a total content of chlorine of 9.1 ppm and a content of extracted chlorine of 0.2 ppm.

### (Comparative Example 1)

50% by mass of fiber 3 and 50% by mass of fiber 4 were mixed and subjected to cylinder papermaking to obtain a separator of Comparative Example 1.

This separator had a thickness of 80 µm and a density of 0.50 g/cm³. The separator had a total content of chlorine of 2.7 ppm and a content of extracted chlorine of 0.2 ppm.

### (Comparative Example 2)

90% by mass of pulp 1 that had been beaten with a disc refiner and 10% by mass of fiber 7 that had not been beaten were mixed and subjected to cylinder papermaking to obtain a separator of Comparative Example 2.

This separator had a thickness of 50 µm and a density of 0.50 g/cm³. The separator had a total content of chlorine of 33.4 ppm and a content of extracted chlorine of 0.7 ppm.

### (Conventional Example 1)

According to Example 3 of Patent Literature 2, a layer having a thickness of 25 µm and a density of 0.95 g/cm³, obtained by subjecting a raw material obtained by beating pulp 3 with a disc refiner to Fourdrinier papermaking, and a layer having a thickness of 25 µm and a density of 0.32 g/cm³, obtained by mixing pulp 2 and pulp 3 at a mass ratio of 1:1 and subjecting the resulting mixture to cylinder papermaking were laminated to each other to obtain a separator of Conventional Example 1.

This separator had a thickness of 50 µm and a density of 0.64 g/cm³, and had a mass ratio of 74:26 between the Fourdrinier layer and the cylinder layer. Therefore, the mass ratio of each pulp of the entire separator is pulp 2: pulp 3 = 87:13. The separator had a total content of chlorine of 32.0 ppm and a content of extracted chlorine of 0.1 ppm.

### (Conventional Example 2)

According to Example 1 of Patent Literature 5, only fiber 5 that had been beaten with a disc refiner was subjected to Fourdrinier papermaking to obtain a separator of Conventional Example 2.

This separator had a thickness of 40 µm and a density of 0.40 g/cm³. The separator had a total content of chlorine of 31.3 ppm and a content of extracted chlorine of 1.2 ppm.

### (Conventional Example 3)

According to Table 1 of Patent Literature 1, only pulp 4 that had been beaten with a disc refiner was subjected to cylinder papermaking to obtain a separator of Conventional Example 3.

This separator had a thickness of 50 µm and a density of 0.50 g/cm³. The separator had a total content of chlorine of 35.7 ppm and a content of extracted chlorine of 0.1 ppm.

### (Conventional Example 4)

According to Example 1 of Patent Literature 3, 60% by mass of pulp 4 that had not been beaten and a raw material obtained by beating 40% by mass of fiber 5 with a conical refiner were mixed, and the resulting mixture was subjected to Fourdrinier papermaking to obtain a separator of Conventional Example 4.

This separator had a thickness of 70 µm and a density of 0.48 g/cm³. The separator had a total content of chlorine of 39.6 ppm and a content of extracted chlorine of 0.7 ppm.

### (Conventional Example 5)

According to Example 2 of Patent Literature 4, 50% by mass of fiber 3 that had not been beaten and a raw material obtained by beating 50% by mass of fiber 5 with a conical refiner were mixed, and the resulting mixture was subjected to cylinder papermaking to obtain a separator of Conventional Example 5.

This separator had a thickness of 25 µm and a density of 0.55 g/cm³. The separator had a total content of chlorine of 36.5 ppm and a content of extracted chlorine of 0.9 ppm.

Table 2 illustrates evaluation results of the separators of Examples, Comparative Examples, and Conventional Examples.

**[Table 2]**

| | USED PULP | METHOD FOR OBTAINING SHEET | THICKNESS (*µ*m) | DENSITY (g/cm³) | CONTENT OF CHLORINE(ppm) | |
|---|---|---|---|---|---|---|
| | | | | | TOTAL CHLORINE | EXTRACTED CHLORINE |
| EXAMPLE1 | PULP1:60% PULP4 :40% | FOURDRINIER AND CYLINDER | 45 | 0.68 | 19.3 | 0.7 |
| EXAMPLE2 | PULP2: 70% PULP4 :30% | CYLINDER | 80 | 0.25 | 28.6 | 0.6 |
| EXAMPLE3 | FIBER1 :50% FIBER3 :50% | FOURDRINIER | 20 | 0.40 | 14.7 | 0.3 |
| EXAMPLE4 | FIBER2:100% | FOURDRINIER | 10 | 0.60 | 9.1 | 0.2 |
| COMPARATIVE EXAMPLE 1 | FIBER3:50% FIBER4:50% | CYLINDER | 80 | 0.50 | 2.7 | 0.2 |
| COMPARATIVE EXAMPLE2 | PULP1:90% FIBER7:10% | CYLINDER | 50 | 0.50 | 33.4 | 0.7 |
| CONVENTIONAL EXAMPLE1 | PULP3:87% PULP2:13% | FOURDRINIER AND CYLINDER | 50 | 0.64 | 32.0 | 0.1 |
| CONVENTIONAL EXAMPLE2 | FIBER5:100% | FOURDRINIER | 40 | 0.40 | 31.3 | 1.2 |
| CONVENTIONAL EXAMPLE3 | PULP4:100% | CYLINDER | 50 | 0.50 | 35.7 | 0.1 |
| CONVENTIONAL EXAMPLE4 | PULP4:60% FIBER5 :40% | FOURDRINIER | 70 | 0.48 | 39.6 | 0.7 |
| CONVENTIONAL EXAMPLE5 | FIBER3:50% FIBER5:50% | CYLINDER | 25 | 0.55 | 36.5 | 0.9 |

Next, an electrochemical element was manufactured using each of the separators of Examples and Comparative Examples illustrated in Table 2.

An aluminum electrolytic capacitor having a rated voltage of 450 V, a rated capacitance of 3.3 µF, an outer diameter of 12 mm, and a height of 20 mm was manufactured using each of the separators of Example 1 and Conventional Example 1.

An aluminum electrolytic capacitor having a rated voltage of 16 V, a rated capacitance of 550 µF, an outer diameter of 10 mm, and a height of 20 mm and an electric double layer capacitor having a rated voltage of 2.7 V, a rated capacitance of 3000 µF, an external diameter of 60 mm, and a height of 140 mm were manufactured using each of the separators of Examples 2 to 4, Comparative Examples 1 and 2, and Conventional Examples 2 to 5.

Incidentally, the aluminum electrolytic capacitor and the electric double layer capacitor using the separator of Comparative Example 1 each had a capacitance less than the rated capacitance by 20% or more immediately after manufacture and also had a high resistance value, and therefore were not subjected to detailed element evaluation.

Specific evaluation of the electrochemical element manufactured using each of the separators of Examples and Comparative Examples was performed under the following conditions and method.

Note that each of the electrochemical elements in the present embodiment was manufactured by winding a pair of electrodes with a separator interposed therebetween, housing the resulting product in a bottomed cylindrical aluminum case, pouring an electrolytic solution into the case to impregnate the product with the electrolytic solution, and then sealing the case with a sealing rubber.

This manufacturing method is similar to those for the aluminum electrolytic capacitor and the electric double layer capacitor except that the electrode member and the electrolytic solution are different.

### [Capacitance]

The capacitance of an electric double layer capacitor was determined by the constant current discharge method of "4.5 Capacitance" defined in "JIS C 5160-1 'Fixed electric double-layer Capacitors for use in electronic equipment Part 1: Generic specification'".

The capacitance of an aluminum electrolytic capacitor was determined by the method of "4.7 Capacitance" defined in "JIS C 5101-1 'Fixed capacitors for use in electronic equipment Part 1: Generic specification'".

### [Internal resistance]

The internal resistance of an electric double layer capacitor was determined by the alternating current (a.c.) resistance method of "4.6 Internal resistance" defined in "JIS C 5160-1 'Fixed electric double-layer Capacitors for use in electronic equipment Part 1: Generic specification'".

### [Impedance]

The resistance of an aluminum electrolytic capacitor was determined by the method of "4.10 Impedance" defined in "JIS C 5101-1 'Fixed capacitors for use in electronic equipment Part 1: Generic specification'".

Furthermore, for the purpose of obtaining the life characteristics of the electrochemical element using each of the separators of Examples, Comparative Examples, and Conventional Examples, a high temperature load test and a long time load test were performed, and a difference in characteristics and the like before and after the tests was calculated.

### [Characteristic change ratio of aluminum electrolytic capacitor after high temperature load test]

A high temperature load test of an aluminum electrolytic capacitor was performed under the following conditions.

Rated DC voltage was applied for 1000 hours under an environment of 160°C.

After this load test, a capacitance and a resistance value (impedance or internal resistance) after the load test were measured by the above measuring method.

Then, a difference between a capacitance after each load test and an initial capacitance was divided by the initial capacitance to calculate a capacitance reduction ratio after the high temperature load test.

In addition, a difference between a resistance value and an initial resistance value was divided by the initial resistance value to calculate a resistance increase ratio after the high temperature load test.

Note that the capacitance reduction ratio and the resistance increase ratio were expressed in percentage.

### [Characteristic change ratio of aluminum electrolytic capacitor after long time load test]

A long time load test of an aluminum electrolytic capacitor was performed under the following conditions.

Rated DC voltage was applied for 4000 hours under an environment of 130°C.

Then, in a similar manner to that for the characteristic change ratio after the high temperature load test, a characteristic change ratio after the long time load test was measured and calculated.

### [Float test of electric double layer capacitor]

A float test of an electric double layer capacitor was performed under the following conditions.

DC voltage of 2.7 V was applied for 1000 hours under an environment of 80°C.

After this test, a capacitance and an internal resistance after the float test were measured by the above measuring method, and a capacitance reduction ratio and a resistance increase ratio after the float test were calculated in a similar manner to that for the aluminum electrolytic capacitor.

### [Cycle test of electric double layer capacitor]

A cycle test of an electric double layer capacitor was performed under the following conditions.

Charge and discharge of 25000 cycles were performed at a current amount of 100 A under an environment of 60°C.

After this test, a capacitance and an internal resistance after the cycle test were measured by the above measuring method, and a capacitance reduction ratio and a resistance increase ratio after the cycle test were calculated in a similar manner to that for the aluminum electrolytic capacitor.

Table 3 illustrates evaluation results of the manufactured aluminum electrolytic capacitors, and Table 4 illustrates evaluation results of the electric double layer capacitors.

**[Table 3]**

| USED SEPARATOR | ALUMINUM ELECTROLYTIC CAPACITOR | | | |
|---|---|---|---|---|
| | HIGH TEMPERATURE LOAD TEST | | LONG TIME LOAD TEST | |
| | CAPACITANCE REDUCTION RATIO (%) | RESISTANCE INCREASE RATIO (%) | CAPACITANCE REDUCTION RATIO (%) | RESISTANCE INCREASE RATIO (%) |
| EXAMPLE1 | 17 | 20 | 13 | 17 |
| CONVENTIONAL EXAMPLE1 | 31 | 42 | 25 | 31 |
| EXAMPLE2 | 19 | 25 | 15 | 18 |
| EXAMPLE3 | 14 | 17 | 9 | 14 |
| EXAMPLE4 | 8 | 9 | 5 | 9 |
| COMPARATIVE EXAMPLE 1 | - | - | - | - |
| COMPARATIVE EXAMPLE2 | 40 | 46 | 28 | 37 |
| CONVENTIONAL EXAMPLE2 | 30 | 41 | 23 | 31 |
| CONVENTIONAL EXAMPLE3 | 32 | 43 | 24 | 32 |
| CONVENTIONAL EXAMPLE4 | 39 | 45 | 26 | 37 |
| CONVENTIONAL EXAMPLE5 | 38 | 45 | 26 | 36 |

**[Table 4]**

| USED SEPARATOR | ELECTRIC DOUBLE LAYER CAPACITOR | | | |
|---|---|---|---|---|
| | FLOAT TEST | | CYCLE TEST | |
| | CAPACITANCE REDUCTION RATIO (%) | RESISTANCE INCREASE RATIO (%) | CAPACITANCE REDUCTION RATIO (%) | RESISTANCE INCREASE RATIO (%) |
| EXAMPLE2 | 17 | 22 | 15 | 18 |
| EXAMPLE3 | 14 | 17 | 10 | 13 |
| EXAMPLE4 | 9 | 14 | 8 | 9 |
| COMPARATIVE EXAMPLE1 | - | - | - | - |
| COMPARATIVE EXAMPLE2 | 35 | 41 | 32 | 34 |
| CONVENTIONAL EXAMPLE2 | 31 | 35 | 25 | 30 |
| CONVENTIONAL EXAMPLE3 | 31 | 37 | 27 | 31 |
| CONVENTIONAL EXAMPLE4 | 34 | 43 | 30 | 34 |
| CONVENTIONAL EXAMPLE5 | 34 | 41 | 29 | 33 |

As can be seen from Table 3, the aluminum electrolytic capacitor of Example 1 has a lower capacitance reduction ratio and a lower resistance increase ratio after the high temperature load test and the long time load test than the aluminum electrolytic capacitor of Conventional Example 1.

Such a result was obtained although the content of extracted chlorine of the separator of Example 1 is larger than that of the separator of Conventional Example 1. Therefore, it is found that not the content of chlorine by an extraction method that has been conventionally studied but the total content of chlorine is important for reliability and prolongation of the life of an aluminum electrolytic capacitor in a high temperature environment.

By referring to the aluminum electrolytic capacitors of Examples 2 to 4, Comparative Example 2, and Conventional Examples 2 to 5 with different rated voltages, it is found that a capacitance reduction ratio and a resistance increase ratio can be improved as compared with Conventional Examples by setting the total content of chlorine to 30 ppm or less.

Furthermore, by comparing the aluminum electrolytic capacitors of Examples 2 to 4 with one another, it is found that it is possible to contribute to improvement in reliability and prolongation of a life under a higher temperature environment by setting the total content of chlorine of a separator to 15 ppm or less or 10 ppm or less, and that a separator using a solvent-spun cellulose fiber is more preferable than a separator using a natural fiber.

Tables 3 and 4 indicate that this tendency is common to the aluminum electrolytic capacitors and the electric double layer capacitors.

Comparative Example 1 is a separator containing only a synthetic fiber. Each of the aluminum electrolytic capacitor and the electric double layer capacitor using this separator had an initial capacitance less than the rated capacitance by 20% or more, and also had a high resistance value. This is considered to be because a synthetic fiber has a lower affinity with an electrolytic solution than a cellulose fiber and therefore the separator does not sufficiently hold the electrolytic solution. This indicates that it is important for a separator to contain a cellulose-based fiber.

As described above, by using the separator of the present invention having a total content of chlorine of 30 ppm or less, it is possible to contribute to improvement in reliability and prolongation of a life in a harsh use environment required in an electrochemical element in recent years.

An example in which the separator of the present embodiment is used for an aluminum electrolytic capacitor and an electric double layer capacitor has been described above.

In the electrochemical element according to the present invention, for an electrode material, an electrolytic solution material, other members, and the like, various materials can be used without any particular limitation.

In addition, the separator for an electrochemical element according to the present invention can also be applied to an electrochemical element other than those described in the present embodiment, for example, an electrochemical element such as a lithium ion capacitor, a lithium primary battery, or a lithium ion secondary battery.

## Claims

1. A separator for an electrochemical element interposed between a pair of electrodes for isolating both the electrodes from each other and holding an electrolytic solution, wherein
the separator contains a cellulose-based fiber, and
the separator has a total content of chlorine of 30 ppm or less.

2. The separator for an electrochemical element according to claim 1, wherein the cellulose-based fiber contains either a natural fiber or a regenerated fiber.

3. The separator for an electrochemical element according to claim 2, wherein the natural fiber is one or more selected from a wood fiber and a non-wood fiber.

4. The separator for an electrochemical element according to claim 2, wherein the regenerated fiber is a solvent-spun cellulose fiber.

5. An electrochemical element comprising:
a pair of electrodes; and
a separator interposed between the pair of electrodes, wherein
for the separator, the separator for an electrochemical element according to any one of claims 1 to 4 is used.

6. The electrochemical element according to claim 5, wherein the electrochemical element is an aluminum electrolytic capacitor.

7. The electrochemical element according to claim 5, wherein the electrochemical element is an electric double layer capacitor.
